# EUROPEAN PATENT APPLICATION

(11) **EP 3 301 260 A1**
(43) Date of publication of application: **04.04.2018**
(21) Application number: 16191785.1
(22) Date of filing: 30.09.2016
(51) Int. Cl.: F01D 5/20, F01D 5/28

(54) **TURBINE BLADE WITH INCREASE TIP LIFETIME AND A METHOD FOR MANUFACTURING SAID TURBINE BLADE**

(71) Applicant: Siemens Aktiengesellschaft, 80333 München (DE)
(72) Inventor: Heselhaus, Andreas, 40235 Düsseldorf (DE)

(57) **Abstract**

In summary the invention relates to a turbine blade (10) with an airfoil comprising next to each other a main body (26) in a tip region (28), said tip region (28) ends in one or more free endings squealer tips (34), wherein the tip region (28) comprises a transition zone (30) with varying material composition and a end zone (32) having a constant material composition, wherein the transition zone is located between the end zone and the main body (26), the material composition in the transition zone (30) vary in a direction to the end zone (32) by continuously changing its local oxidation resistant properties. With such a turbine blade it is possible to have a longer operation time with reduced tip clearances leading to longer lasting high efficient operation of a turbine.

## Description

The invention relates to a turbine blade having an airfoil. The airfoil comprising next to each other a main body and a tip region, said tip region ends at one or more free ending squealer tips. The invention relates also to a method for manufacturing said turbine blade.

It is known, that blade tips, especially those of gas turbine blades, are subject to severe oxidation during operation. During the operation of said turbine the tips can burn down due to increased oxidation leading to a tip clearance between the blade tip and their opposing hot gas path casing being increased with reduced turbine efficiency. Therefore, after a certain time of operation the blades need to be inspected. If the remaining tips are considered as not conformant it is possible to completely machine off the tips and re-built them by add-on welding. This refurbishment procedure leads to serious costs. Moreover, the materials for welding are usually even less resistant against oxidation as the original turbine blade alloy, so that after refurbishment the engine performance begins again to decrease.

Up to now, turbine blades and their airfoils are made monolithic and from one alloy only. Current way of dealing with the oxidation issue is to accept the disadvantages of one of the following two alternatives: Either low oxidation resistant materials were used, requiring expensive refurbishment two or three times during their overall lifetime. Or highly oxidation resistant alloys are used to make the blade tips more robust against oxidation. Disadvantage of highly oxidation resistant materials is usually cost. Further said alloys are harder to cast, thus achieving lower casting yield rate, harder to machine and harder to weld. All of this increases the turbine blade cost.

Moreover, the density of the high oxidation alloys is usually higher than for low oxidation alloys. Especially for turbine blades leads this to undesired life reduction in the blade roots and rotor disk, reducing the overall lifetime.

Also, the increased density can shift the vibration frequencies for a given blade geometry into a dangerous regime, which limits operatability or requires additional measures to shift the frequencies back.

This invention will overcome the drawbacks. Therefore the objective is to provide a turbine blade having an extended lifetime at low costs while maintaining for a longer period a higher turbine efficiency.

The invention proposes a turbine blade with an airfoil comprising next to each other as seen in the radial direction a main body and a tip region, wherein the tip region comprises a transition zone with varying material composition and an end zone having a constant material composition, wherein the transition zone is located between the end zone and the main body, the material composition in the transition zone vary in a direction to the end zone by continuously changing its local mechanical and/or chemical property, especially its oxidation resistant properties.

Hence, the problem is solved with a turbine blade having a airfoil ending with a continuous change of materials, especially alloys, in the vicinity of the blade tip. With such a material change, the mechanical and/or chemical property can be adapted to the according local requirements. Especially a tip made of a higher oxidation resistant alloy could be attached directly to a conventional airfoil main body made of a lower oxidation resistant alloy by welding, during operation at the joint location severe enormous stresses have to be expected due to the different thermal expansion of the two alloys, leading at said joint location to early crack initiation and quick growth and thus to early part failure. Instead of a direct attachment the invention proposes a continuous, or better, a smooth alloy change. This alloy change could be achieved by creation of the blade tip region by micro cladding or by selective laser melting (SLM). For this the SLM process starts at the top of a conventional airfoil body without tip, using the same alloy as the airfoil body. Then the composition of the material being deposited by the SLM process changes from layer by layer towards the end zone, where the final composition with the higher oxidation resistant alloy is applied. Thereby two major requirements get fulfilled: at first a sound joint between the two different domains of the airfoil is achieved and at second minimized stresses between the two different thermal expansion coefficients (CTE) of the main body and the end zone. Since the CTE's change over a comparatively large distance in small steps, the difference in thermal expansion of neighbored layers is reduced and such is the stress generation. In a preferred embodiment, the remaining part of the airfoil called end zone will be created by SLM, using only the oxidation resistant alloy.

In a preferred embodiment said tip region ends at one or more free ending squealer tips, and a bottom located next to a single squealer tip or a bottom of a pocket located between two squealer tips is located in the end zone. This enables a long lasting upper tip section, having a surface which is completely made of oxidation resistant material.

Main advantage of this invention is that the main body could be conventionally casted, making use of all the experience and cost reducing measures developed for this standard technique. Only the tip region would be added by SLM in a subsequent step, nearly eliminating all the issues observed when creating the whole airfoil via SLM or via casting. Only the contact surface at the top of the conventionally casted airfoil main body is to be casted or machined flat, so that the SLM process could build the tip region onto this surface.

In summary this invention enables to produce a turbine blade from two different material alloys and by two different manufacturing techniques. By the method described above it is possible to
- combine the advantages of two different material alloys (e.g. higher oxidation resistance at the tip region, minimized costs at the main body)
- minimize manufacturing cost (conventional casting with high yield alloys plus SLM only at the tip region)
- maximize operation time without refurbishment
- maintain full flexibility of material choice for each domain of the airfoil, thereby be unrestricted addressing engineering needs like frequency tuning and oxidation life and
- create a stress-reducing and profound joint between the two airfoil domains.

The invention displayed in the accompanied drawing will be explained in the following description without limiting the scope of the invention.

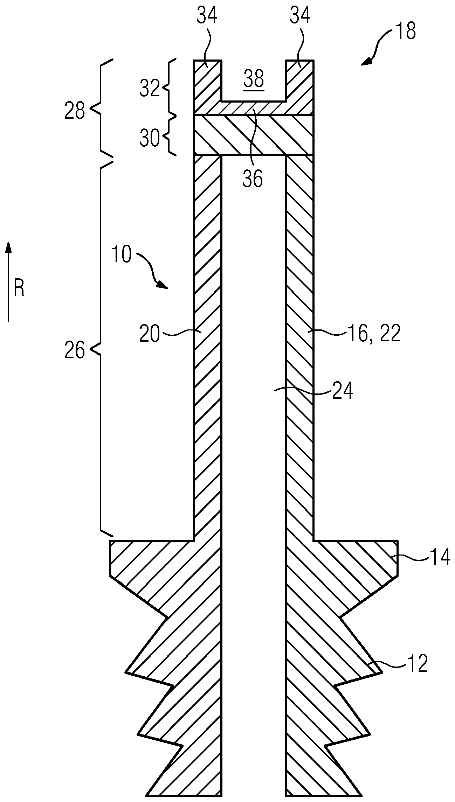

- Fig. 1: shows schematically a cross section through a turbine blade according to the invention.

A turbine blade 10 according to the invention is shown in figure 1. Said turbine blade 10 comprises as seen along a radial direction R a blade root 12 of any form, followed by a platform 14. From said platform 14 an airfoil 16 extents in the same direction to its tip 18. As known from the prior art, the airfoil 16 comprises a pressure side 20 and a suction side 22 extending in a direction perpendicular to the radial direction R from a leading edge to a trailing edge (both not shown). For cooling purposes the turbine blade 10 is hollow providing at least one cooling channel 24 through which a cooling medium can flow during operation. The airfoil 16 can be separated into two sections, a main body 26 and a tip region 28. The main body 26 and also the platform section 14 as well as the blade roots 12 are monolithically manufactured by a conventionally casting procedure, i.e. investment casting.

According to the invention, the tip region is added onto the conventional casted main body 26 by additive manufacturing, especially by selective laser melting (SLM).

The tip region 28 comprises a transition zone 30 and an end zone 32. The material of the transition zone 30 has - as seen in radial direction R - a varying material composition while the material in the end zone 32 has - as seen in radial direction R - a constant material composition.

Due to the fact that the tip region 28 is made by additive manufacturing, it is possible that the material of each layer added onto its underlying material has another material composition than said underlying material. It is also possible that the material change occur only in each second or more layer, depending on the layer thickness that is added each time onto the underlying material. By doing this the mechanical and/or chemical properties, especially the oxidation resistant property and the thermal expansion property of the added layer, change with respect to the properties of the underlying material. Hence, the material is adapted layerwise or in very small steps, so that at the end of the transition zone 30 the most outward layer has the same or nearly the same material composition than that of the end zone 32.

As shown in Fig. 1, the turbine blade 10 has a tip region 28 comprising two squealer tips 34, one located on the pressure side 20 and the located on the suction side 22. In a preferred embodiment, at least said squealer tips 34 are made of a material having a higher oxidation resistant property than that of the main body 26. Further preferred, also the bottom 36 of a pocket 38, located between said squealer tips 34, is made of the material having a higher oxidation resistant property than that of the main body. In other words, the bottom 36 is not located in the transition zone 30, but in the end zone 32. This leads to a very oxidant resistant turbine blade tip 18 having an increased lifetime, compared to conventional turbine blade tips.

In summary the invention relates to a turbine blade 10 with an airfoil 12 comprising - as seen in radial direction R - next to each other a main body 26 and a tip region 28, said tip region 28 ends in one or more free endings squealer tips 34, wherein the tip region 28 comprises a transition zone 30 with a varying material composition and an end zone 32 having a constant material composition, wherein the transition zone is located between the end zone 32 and the main body 26, the material composition in the transition zone 30 vary in a direction to the end zone 32 by continuously increasing its local mechanical or chemical property, especially its oxidation resistant properties. With such a turbine blade 10 it is possible to have a longer operation time with reduced tip clearances leading to longer lasting high efficient operation of a turbine.

## Claims

1. Turbine blade (10)
with an airfoil (16) comprising next to each other a main body (26) and a tip region (28),
**characterized in**
**that** the tip region (28) comprises a transition zone (30) with varying material composition and an end zone (32) having a constant material composition, wherein the transition zone (30) is located between the end zone (32) and the main body (26),
the material composition in the transition zone (30) vary in a direction to the end zone (32) by continuously changing its local mechanical or chemical property.

2. Turbine blade (10) according to claim 1,
wherein the considered chemical property is the oxidation resistant property and
wherein the end zone (32) is made of a material having a higher oxidation resistant property than that of the main body (26).

3. Turbine blade (10) according to claim 1 or 2,
wherein the main body (26) of the airfoil (16) is manufactured by investment casting.

4. Turbine blade (10) according to anyone of the claims 1 to 3,
wherein the tip region (28) with varying material composition is manufactured additively, especially by selective laser melting or micro cladding.

5. Turbine blade (10) according to anyone of the claims 1 to 4,
wherein the tip region ends at one or more free ending squealer tips (34), and
wherein a bottom located next to one squealer tip or a bottom (36) of a pocket (38) located between said squealer tips (34) is located in the end zone (32).

6. Method for manufacturing a turbine blade (10) according to anyone of the claims 1 to 5,
comprising the steps:
Investment casting the airfoil (16) main body (26) and then adding an airfoil (16) tip region (28) additively onto the casted airfoil (16) main body (26).

7. Method according to claim 6,
wherein the additively manufacturing is Selective Laser Melting (SLM) or Micro Cladding.
